# EUROPEAN PATENT APPLICATION

(11) **EP 1 609 363 A1**
(43) Date of publication of application: **28.12.2005**
(21) Application number: 05253349.4
(22) Date of filing: 01.06.2005
(51) Int. Cl.: A01N 65/00

(54) **Use of garlic extract for systemic treatment of growing crops**

(30) Priority: 11.06.2004 GB 0413083
(71) Applicant: Garlic Farms (UK) Limited, Holmbury St Mary Dorking, Surrey RH5 6LZ (GB)
(72) Inventor: Struth, Hugh, Dorking, Surrey RH5 6LZ (GB)
(74) Representative: Goodenough, Nigel

(57) **Abstract**

A method of treatment of growing plants comprises applying garlic extract to the root region of the plant. The garlic extract is mixed with water and nutrient feed and is distributed by means of an irrigation system supplying a multiplicity of plants from a single bulk supply of irrigation liquid.

## Description

This invention relates to the use of garlic extracts for the systemic treatment of growing crops.

The term "garlic extract" used herein means an aqueous solution obtained by crushing garlic bulbs in the presence of water and filtering solid material from the resultant mash to leave an aqueous solution.

It is known that the use garlic extract can reduce or eliminate certain pests on certain crops. In particular, it is known to apply garlic extract as a spray to glasshouse grown crops such as tomatoes, cucumbers, lettuce and strawberries in order to reduce or eliminate insect populations. The use of garlic extract in this manner is also believed to have an effect of reducing or eliminating fungal diseases of the crop treated. Since garlic extract can be produced in accordance with the requirements of the Soil Association, the application of garlic extract in the manner described provides an acceptable organic treatment. Apart from the obvious environmental advantages of an organic treatment for pests such as aphid or whitefly, the fact that crops treated with garlic extract can be sold as organic produce offers a significant commercial advantage for growers.

Heretofore, garlic extract has been applied to the plants by spraying. Spraying, if it is to be effective, is a relatively slow and laborious process. Further, because the garlic extract biodegrades within a relatively short period, re-application of garlic extract at regular intervals is required in order to maintain effective protection. Garlic extract is a pungent volatile material and in order to avoid tainting delicately flavoured crops (particularly strawberries) it is necessary to suspend the spray program a predetermined number of days before the crop is picked. This is undesirable since it will potentially allow development of pests and diseases when spraying is suspended.

The exact modes of actions by which garlic extract operates is not fully understood. The product is mildly biocidal in nature and in the circumstances it is believed that the benefits obtained, particularly in terms of reducing insect population, are largely due to the fact that the application of the surface spray of garlic extract produced conditions which are not favoured by insect pests. It is thought that the volatile nature of the garlic extract contributes significantly to this deterrent effect.

We have now discovered that, most surprisingly, the desirable characteristics of garlic extract in terms of reducing insect population can be obtained if the garlic extract is applied to the roots of growing plants and is, at least to an extent, absorbed through the root system and carried systemically to the foliage and fruit. Although the use of systemic insecticides is, of course, known, such insecticides depend for their effectiveness on a toxic action. Since garlic extract has low biocidal activity it is surprising that, when used as a systemic treatment, it remains effective as an insect population reducing agent.

We have further found that the application of garlic extract in a systemic manner continues to provide improved protection against fungal diseases and appears to act as a growth stimulant for the plants themselves.

Accordingly, one aspect of the present invention provides a method of treatment of growing plants comprising applying garlic extract to the root region of the plant.

It has been found that the required application of garlic extracts to the root region can be carried out in a most effective manner if the garlic extract is mixed with water and nutrient feed to the plants in question. In this context, many plants which are grown under controlled conditions are fed and irrigated by supplying an aqueous solution of nutrients to the plant through an irrigation system. Irrigation systems of particular interest in relation to the present invention are those in which water and nutrients are supplied via pipe work systems directly to the root area of the plant (as distinct from overhead spray irrigation systems). It has been found that if garlic extract is mixed with the water/nutrient supply effective control of insect populations can be obtained. Further, most surprisingly, the previous practice of suspending the application of garlic extract spraying prior to crop collection in order to avoid tainting of products has been found to be unnecessary when the garlic is applied as part of the water/nutrient supply, and even with delicately flavoured crops such as strawberries garlic extract may be fed to the root system continuously through the cropping period without tainting the fruit. This is highly significant and allows continuous protection of the plants from insect infestation through the cropping period.

It is to be understood that the use of garlic extract in the manner of the preferred embodiments of the present invention will not necessarily produce complete freedom from insect colonisation within the plants being treated. However, the results of systemic application of garlic extract are believed to be at least as good as, and probably better than, the results which are currently being obtained through spray application of garlic extract. Since the process of applying garlic extract as part of an irrigation/feed program is considerably easier than repeated spraying, the present invention offers substantial advantages even if the results are no better than those obtained by conventional surface spraying with garlic extract.

The invention will be better understood from the following description of a preferred embodiment thereof, given by way of example only, reference being had to the accompanying drawings wherein:
Figure 1 illustrates schematically in transverse cross section the production of strawberries under glass and
Figure 2 illustrates an apparatus for providing the required feed of garlic extract.

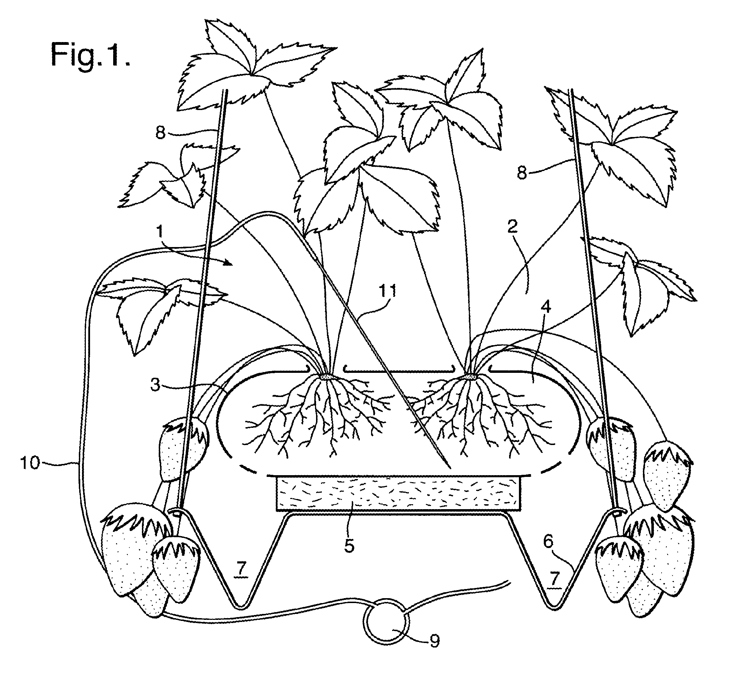

Referring firstly to Figure 1 there is shown schematically in transverse cross section the commercial production of strawberries under glass. As will be understood by those skilled in the art the strawberry plants 1,2 are planted in a bag 3 of compost 4. The bag 3 stands on a block 5 of expanded polystyrene which is in turn supported on metal platform 6. The platform 6 defines drainage channels 7 and is suspended by chains or rods 8 from a suitable support structure. Nutrients and water are fed to the plants 1,2 from a supply pipe 9 via an irrigation tube 10 and a rigid plastic dripper 11.

The arrangements described above are conventional for the production of strawberries under glass and may be applied to a wide range of other crops, for example tomatoes, cucumbers, peppers, lettuces, radishes, spring onions, etc. The fact that the present invention may be applied to conventional growing techniques with only minimum additional requirement is a significant advantage of the present invention.

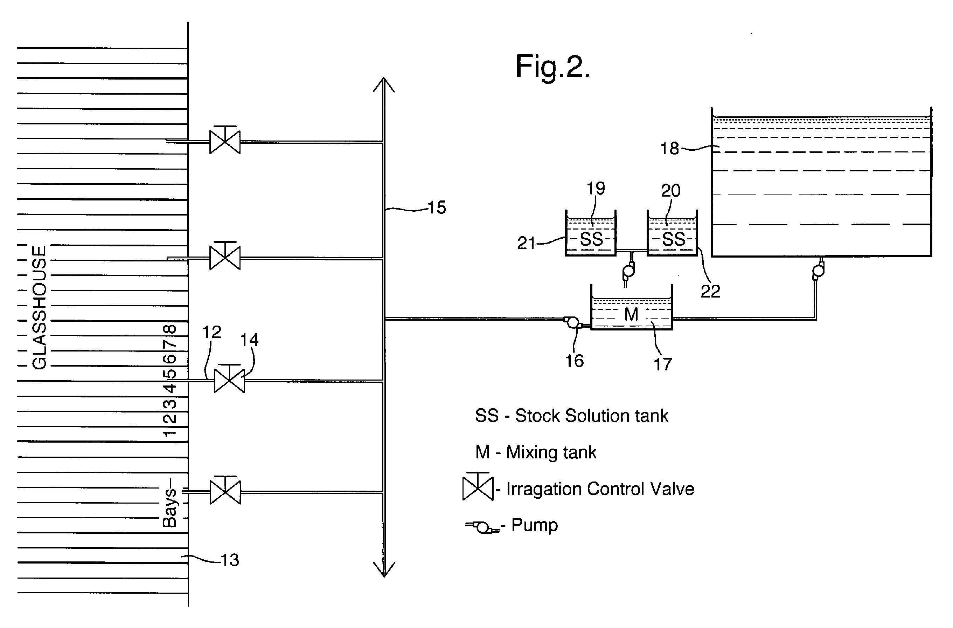

Referring now to Figure 2 the supply pipe 9 (Fig 1) is connected to a feed pipe 12 which supplies several bays of a greenhouse 13. Flow through the feed pipe 12 is controlled by a valve 14. The feed pipe 12, together with other feed pipes of the system is connected to a manifold 15 which is supplied with water and/or a water/nutrient mix by a feed pump 16. The inlet to the feed pump 16 is supplied from a mixing tank 17 which is in turn fed with water from a suitable source such as storage tank 18 and stock solutions 19,20 from stock solution tanks 21,22. In operation of the system described above metered quantities of water and stock solutions are fed to the mixing tank 17 where they are mixed and fed by pump 16 for distribution through the pipe work system described.

In application of the present invention one of the stock solutions 19,20 will be garlic extract. The other stock solution will typically be a nutrient mix. The system will be set up to supply garlic extract in a quantity to produce a garlic extract concentration of an appropriate level to produce the required functionality. It is envisaged that where the garlic extract is to be used for the preventions of insects on crops the irrigation solutions supplied to the plants will contain 1 part of garlic extract to 40,000 parts of water. However, it is to be stressed that the garlic concentration will be selected in light of the requirements of the grower and it is envisaged that the garlic concentration may be varied according to the pest and disease levels present within the crop. Typically, the garlic level may be increased if a crop comes under disease or pest pressure. In generally, however, the garlic extract will be present as a rate within the range 1 part garlic extract to 10,000 parts of water to 1 part of garlic to 60,000 parts of water. Each and every discreet value within this range is hereby expressly disclosed together with every other range having a lower limit equal to or greater than 1:10,000 and an upper limit greater than the lower limit and equal to or less than 1:60,000

## Claims

1. A method of treatment of growing plants comprising applying garlic extract to the root region of the plant.

2. A method according to Claim 1 wherein, the garlic extract is mixed with water and nutrient feed to the plant in question.

3. A method according to Claim 1 or Claim 2 wherein, the garlic extract is distributed via an irrigation system supplying a multiplicity of plants from a single bulk supply of irrigation liquid.

4. A method according to Claim 3 wherein, garlic extract is present in the irrigation water in a ratio of between 1:10,000 and 1:60,000.

5. A method according to Claim 4 wherein, garlic extract is present at a rate of 1:4000.
